Europäisches Patentamt

European Patent Office

Office européen des brevets

(19)

(11) **EP 1 274 929 B1**

(12) **EUROPÄISCHE PATENTSCHRIFT**

(45) Veröffentlichungstag und Bekanntmachung des Hinweises auf die Patenterteilung:
**12.10.2005 Patentblatt 2005/41**

(21) Anmeldenummer: **01919209.5**

(22) Anmeldetag: **17.03.2001**

(51) Int Cl.⁷: **F02D 41/14**, F02D 33/02, F01N 3/08, F02D 41/40

(86) Internationale Anmeldenummer:
**PCT/DE2001/001033**

(87) Internationale Veröffentlichungsnummer:
**WO 2001/077508 (18.10.2001 Gazette 2001/42)**

(54) **VERFAHREN ZUM BETREIBEN EINER BRENNKRAFTMASCHINE**

METHOD FOR OPERATING AN INTERNAL COMBUSTION ENGINE

PROCEDE D'UTILISATION D'UN MOTEUR A COMBUSTION INTERNE

(84) Benannte Vertragsstaaten:
**DE FR GB IT**

(30) Priorität: **08.04.2000 DE 10017545**

(43) Veröffentlichungstag der Anmeldung:
**15.01.2003 Patentblatt 2003/03**

(73) Patentinhaber: **ROBERT BOSCH GMBH**
**70442 Stuttgart (DE)**

(72) Erfinder:
• **BIRK, Manfred**
**71739 Oberriexingen (DE)**
• **MICHALSKE, Andreas**
**71229 Leonberg (DE)**
• **SAMUELSEN, Dirk**
**71636 Ludwigsburg (DE)**

(56) Entgegenhaltungen:
| | |
|---|---|
| **DE-A- 4 445 684** | **DE-A- 19 744 409** |
| **DE-A- 19 813 377** | **DE-A- 19 851 457** |
| **JP-A- 63 248 954** | **US-A- 5 752 485** |

• **PATENT ABSTRACTS OF JAPAN vol. 1997, no. 04, 30. April 1997 (1997-04-30) & JP 08 319862 A (TOYOTA MOTOR CORP), 3. Dezember 1996 (1996-12-03)**
• **PATENT ABSTRACTS OF JAPAN vol. 013, no. 041 (M-791), 30. Januar 1989 (1989-01-30) & JP 63 248954 A (TOYOTA MOTOR CORP), 17. Oktober 1988 (1988-10-17)**
• **PATENT ABSTRACTS OF JAPAN vol. 017, no. 263 (M-1415), 24. Mai 1993 (1993-05-24) & JP 05 001609 A (TOYOTA MOTOR CORP), 8. Januar 1993 (1993-01-08)**

EP 1 274 929 B1

**Beschreibung**

Stand der Technik

Die Erfindung geht aus von einem Verfahren zum Betreiben einer Brennkraftmaschine insbesondere eines Kraftfahrzeugs, bei dem eine Soll-Kraftstoffmasse und/oder eine Soll-Luftmasse in Abhängigkeit von einem Soll-Drehmoment ermittelt wird/werden, und bei dem von einer ersten Betriebsweise in eine zweite Betriebsweise der Brennkraftmaschine übergegangen wird. Die Erfindung betrifft ebenfalls eine entsprechende Brennkraftmaschine sowie ein entsprechendes Steuergerät für eine Brennkraftmaschine.

Aus der DE 198 51 457 ist ein Verfahren und eine Vorrichtung zur Steuerung des Drehmoments einer Antriebseinheit bekannt. Dabei wird die Luft bzw. die Kraftstoffmenge als Funktion und in Abhängigkeit von der Differenz zwischen einem Soll-Motormoment und einem Ist-Motormoment einer Brennkraftmaschine eines Kraftfahrzeuges eingestellt.

Bei Benzin-Brennkraftmaschinen, wie auch bei Diesel- Brennkraftmaschinen ist es bekannt, zur Reduzierung von bei der Verbrennung entstehenden Stickoxiden (NOx) sog. Speicherkatalysatoren zu verwenden. Diese Speicherkatalysatoren sind dazu geeignet, die Stickoxide insbesondere bei einer ersten mageren Betriebsweise der Brennkraftmaschine zwischenzuspeichern, um sie danach bei einer nachfolgenden zweiten fetten Betriebsweise der Brennkraftmaschine wieder abzugeben und zu reduzieren. Dieser, für die Regenerierung des Speicherkatalysators erforderliche Übergang in die fette Betriebsweise stellt ein Problem dar. Insbesondere muss gewährleistet werden, dass dieser Übergang ruckfrei erfolgt. Es darf also beim Übergang das Ist-Drehmoment der Brennkraftmaschine nicht bzw. nur unspürbar von dem Soll-Drehmoment abweichen.

Das Ist-Drehmoment kann mit Hilfe eines Drehmomentsensors gemessen werden. Ebenfalls ist es gemäß der DE 44 45 684 A 1 bekannt, das Ist-Drehmoment in Abhängigkeit von der Drehzahl der Brennkraftmaschine zu ermitteln.

Aufgabe der Erfindung ist es, ein einfaches kostengünstiges Verfahren zum Betreiben einer Brennkraftmaschine zu schaffen, mit dem ein ruckfreier Übergang in die zweite Betriebsweise der Brennkraftmaschine und damit in die Regenerierung des Speicherkatalysators möglich ist. Diese Aufgabe wird gelöst mit den Merkmalen nach den unabhängigen Ansprüchen 1, 7, 8-10.

Diese Aufgabe wird bei einem Verfahren der eingangs genannten Art erfindungsgemäß dadurch gelöst, dass beim Übergang in die zweite Betriebsweise der Brennkraftmaschine eine Ist-Drehmoment Änderung ermittelt wird, dass eine Drehmoment- Differenz zwischen der Soll-Drehmoment-Änderung und der Ist-Drehmoment-Änderung berechnet wird, und dass die Soll- Kraftstoffmasse und/oder die Soll-Luftmasse in Abhängigkeit von der Drehmoment-Differenz beeinflusst wird/werden. Eine weitere Regelungsmöglichkeit ist im unabhängigen Anspruch 7 aufgeführt.

Besonders vorteilhaft ist es, dass die Drehmoment-Änderung aus der Drehzahl der Brennkraftmaschine ermittelt werden kann. Bei Verwendung der Drehmoment-Änderung erbringt ein Vergleich dieser beiden Größen dasselbe Ergebnis wie ein Vergleich der zugehörigen absoluten Größen. Die Verwendung der relativen Größen bringt jedoch insbesondere den wesentlichen Vorteil mit sich, dass die Änderung des Ist-Drehmoment ohne größeren Aufwand aus der Änderung der Drehzahl der Brennkraftmaschine abgeleitet werden kann.

Wie erwähnt wurde, kann die Bestimmung der Soll-Kraftstoffmasse und/oder der Soll-Luftmasse in Abhängigkeit von dem Soll-Drehmoment zu Komfortproblemen bei dem Übergang in die Regenerierung des Speicherkatalysators führen. Diese Komfortprobleme resultieren dabei aus einer Abweichung des Ist-Drehmoments von dem erwünschten Soll-Drehmoment. Durch den erfindungsgemäßen Vergleich der Ist-Drehmoment- und der Soll-Drehmoment-Differenzen wird eine derartige Abweichung erkannt. Durch die daraufhin durchgeführte Beeinflussung der Soll-Kraftstoffmasse und/oder der Soll-Luftmasse in Abhängigkeit von der ermittelten Drehmoment-Differenz wird erfindungsgemäß die genannte Drehmoment-Differenz auf ein Minimum beschränkt. Letztlich ist es damit durch die Erfindung möglich, jegliche Drehmoment-Abweichungen sofort zu erkennen und entsprechende Gegenmaßnahmen zu ergreifen. Die Drehmoment-Abweichungen können damit auf ein Minimum beschränkt werden. Dies stellt gleichzeitig einen erhöhten Komfort beim Übergang in die fette Betriebsweise der Brennkraftmaschine und damit bei der Durchführung der Regenerierung des Speicherkatalysators dar.

Wesentlich ist dabei, dass die erfindungsgemäße Ermittlung der Drehmoment-Differenz nicht zwingend das Vorhandensein eines Drehmomentsensors erforderlich macht. Stattdessen ist es ebenfalls möglich, das Ist-Drehmoment - wie bereits erwähnt wurde - als absolute Größe aus der Drehzahl der Brennkraftmaschine abzuleiten. Damit ist kein zusätzlicher Sensor o. dgl. für die Ausführung der vorliegenden Erfindung erforderlich. Dies stellt gleichzeitig eine Reduzierung der Kosten und des konstruktiven Aufwands dar.

Besonders vorteilhaft ist es, wenn das Ist-Drehmoment als relative Größe aus der Drehzahl der Brennkraftmaschine ermittelt wird. Wird dann auch noch das Soll-Drehmoment als relative Größe ermittelt, so erbringt ein Vergleich dieser beiden Größen dasselbe Ergebnis wie ein vergleich der zugehörigen absoluten Größen. Die Verwendung der relativen Größen bringt jedoch insbesondere den wesentlichen Vorteil mit sich, daß die Änderung des Ist-Drehmoment ohne größeren Aufwand aus der Änderung der Drehzahl der Brennkraftmaschine abgeleitet werden kann.

Besonders vorteilhaft ist es, wenn die Drehmoment-Differenz von einem Regler zu Null geregelt wird. Durch eine derartige Verwendung eines Reglers ist es möglich, ein Optimum an Fahrkomfort zu erreichen. Mit Hilfe des Reglers kann damit ein Ruckeln bei dem Übergang in die Regenerierung des Speicherkatalysators vollständig vermieden werden.

Bei einer vorteilhaften Ausgestaltung der Erfindung wird/werden die Sollkraftstoffmasse und/oder die Soll-Luftmasse über ein Reglereingriffsmodell von der Drehmoment-Differenz beeinflusst. Auf diese Weise wird berücksichtigt, dass das erfindungsgemäße Verfahren im Wesentlichen nur beim Übergang in die fette Betriebsweise der Brennkraftmaschine und damit beim Übergang in die Regenerierung des Speicherkatalysators eingesetzt wird. Über das Reglereingriffsmodell ist es möglich, irgendwelche Komforteinbußen durch Ruckeln o.dgl. beim Übergang in die Regenerierung des Speicherkatalysators sicher zu vermeiden.

Bei einer vorteilhaften Weiterbildung der Erfindung wird/werden die Soll-Kraftstoffmasse und/oder die Soll-Luftmasse in Abhängigkeit von dem Soll-Drehmoment von einer Steuerung gesteuert. Dies bedeutet, dass im normalen Betrieb der Brennkraftmaschine die Soll-Kraftstoffmasse und/oder die Soll-Luftmasse nicht geregelt, sondern nur in Abhängigkeit von dem Soll-Drehmoment gesteuert werden. Diese Vorwärtssteuerung ist an sich während einer mageren Betriebsweise der Brennkraftmaschine völlig ausreichend. Nur während einer fetten Betriebsweise der Brennkraftmaschine, also u.a. während der Regenerierung des Speicherkatalysators, kann diese Steuerung, wie eingangs erläutert wurde, zu Ungenauigkeiten und damit zu Drehmoment-Abweichungen führen. Diese Drehmoment-Abweichungen können dann ebenfalls durch die vorliegende Erfindung kompensiert bzw. ausgeregelt werden. Bei der Ausführung nach dem unabhängigen Anspruch 7 beeinflusst.

Diese Ausführung der Erfindung ist besonders dann von großem Vorteil, wenn das Kraftstoff/Luft-Gemisch, das dem Brennraum der Brennkraftmaschine zugeführt wird, bereits das erwünschte Lambda aufweist. Durch die Veränderung des Soll-Spritzabstands zwischen der ersten und der zweiten Teileinspritzung wird dieses Lambda nämlich nicht verändert. Stattdessen wirkt die Veränderung des Soll-Spritzabstands nur auf das von der Brennkraftmaschine erzeugte Ist-Drehmoment. Auf diese besonders vorteilhafte Weise kann somit das Ist-Drehmoment-Differenz, ohne weiteres an das Soll-Drehmoment-Differenz angepasst werden, ohne dass hierdurch das Lambda der Brennkraftmaschine und damit die Abgaszusammensetzung der Brennkraftmaschine verändert werden.

Von besonderer Bedeutung ist die Realisierung des erfindungsgemäßen Verfahrens in der Form eines Steuerelements, das für ein Steuergerät einer Brennkraftmschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, bspw. ein Flash-Memory oder Read-Only-Memory.

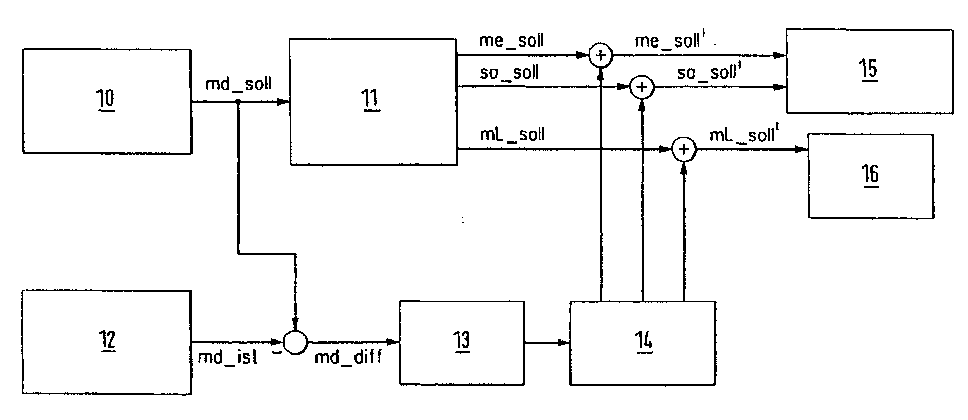

Die einzige Figur der Zeichnung zeigt ein schematisches Blockschaltbild eines Ausführungsbeispiel gemäß einem Vergleichsbeispiel, das nicht erfindungsgemäß ist

Bei dem Blockschaltbild der Figur wird von einem Fahrerwunsch 10 ausgegangen. Dieser Fahrerwunsch kann bspw. mit Hilfe eines Fahrpedals von dem Fahrer des Kraftfahrzeugs vorgegeben werden. Das Ausgangssignal des Fahrerwunsches 10 ist ein Soll-Drehmoment md_soll.

Das Soll-Drehmoment md_soll wird dann einer Momentensteuerung 11 zugeführt. Diese Momentensteuerung 11 berechnet auf der Grundlage des Soll-Drehmoments md_soll eine Soll-Kraftstoffmasse me_soll sowie eine Soll-Luftmasse mL_soll.

Wird die Brennkraftmaschine in einer mageren Betriebsweise betrieben, ist also Lambda größer als 1, so hängt das von der Brennkraftmaschine tatsächlich erzeugte Drehmoment weitgehend nur von der eingespritzten Kraftstoffmasse ab. Die der Brennkraftmaschine zugeführte Luftmasse und die daraus resultierende Füllung des Brennraums der Brennkraftmaschine haben im mageren Betrieb derselben nahezu keine Bedeutung. Insoweit ist es während einer mageren Betriebsweise der Brennkraftmaschine ausreichend, die Soll-Kraftstoffmasse me_soll und die Soll-Luftmasse mL_soll mit Hilfe der Momentensteuerung 11 zu beeinflussen.

Während einer fetten Betriebsweise der Brennkraftmaschine, wenn also Lambda kleiner als 1 ist, spielt jedoch die der Brennkraftmaschine zugeführte Luftmasse und damit die Füllung im Brennraum der Brennkraftmaschine eine grundlegende Rolle. An sich kann dieser Einfluss der Luftmasse während der fetten Betriebsweise der Brennkraftmaschine durch entsprechende Modellrechnungen berücksichtigt werden. Da jedoch insbesondere die tatsächlich dem Brennraum zugeführte Luftmasse nicht exakt bekannt ist, würde die Möglichkeit bestehen, dass aus den von der Momentensteuerung 11 berechneten Soll-Kraftstoffmasse me_soll und Soll-Luftmasse mL_soll nicht das erwünschte Soll-Drehmoment md_soll resultiert. Das kann zu Drehmomentschwankungen oder einem Ruckeln insbesondere bei einem Übergang in die fette Betriebsweise der Brennkraftmaschine führen.

Mit Hilfe einer Drehmomentbestimmung 12 wird nun das tatsächliche Drehmoment md_ist der Brennkraftmaschine ermittelt. Hierzu ist es möglich, dass ein Drehmomentsensor vorgesehen ist, der das von der Brennkraftmaschine abgegebene Ist-Drehmoment md_ist misst. Besonders vorteilhaft ist es jedoch, das Ist-Drehmoment md_ist der Brennkraftmaschine aus der Drehzahl der Brennkraftmaschine abzuleiten.

Es wird das Soll-Drehmoment md_soll und das Ist-Drehmoment md_ist miteinander verglichen. Die entstehende Drehmoment-Differenz md_diff wird einem Regler 13 zugeführt. Dieser Regler 13 ist derart ausgelegt, dass die Drehmoment-Differenz md_diff zwischen dem Soll-Drehmoment md_soll und dem Ist-Drehmoment md_ist zu Null wird.

Das Ausgangssignal des Reglers 13 ist einem Reglereingriffsmodell 14 zugeführt. Von diesem Reglereingriffsmodell 14 werden Ausgangsgrößen erzeugt, die dann additiv mit der Soll-Kraftstoffmasse me_soll und der Soll-Luftmasse mL_soll verknüpft werden.

Von dieser korrigierten Soll-Kraftstoffmasse me_soll' und von dieser korrigierten Soll-Luftmasse mL_soll' wird dann die Brennkraftmaschine beeinflusst. Dies wird bei dem Ausführungsbeispiel der Figur dadurch erreicht, dass die korrigierte Soll-Kraftstoffmasse me_soll' einer Zumesseinrichtung 15 für die Einspritzung zugeführt wird und die korrigierte Soll-Luftmasse mL_soll' einer Abgasrückführung 16.

Durch die Bildung der korrigierten Soll-Kraftstoffmasse me_soll' bzw. der korrigierten Soll-Luftmasse mL_soll', also letztlich über den Eingriff des Reglers 13 und des Reglereingriffs 14 wird erreicht, dass die Drehmoment-Differenz md_diff zwischen dem Soll-Drehmoment md_soll und dem Ist-Drehmoment md_ist auf ein Minimum begrenzt bzw. zu Null ausgeregelt wird. Damit wird jegliches Ruckeln oder sonstige Komforteinbußen durch Drehmomentschwankungen vermieden.

Wie erwähnt, können derartige Komforteinbußen insbesondere bei einem Übergang in die fette Betriebsweise der Brennkraftmaschine auftreten. Das erläuterte Verfahren, also insbesondere der Eingriff über den Regler 13 und den Reglereingriff 14 ist damit vorzugsweise beim Übergang in die fette Betriebsweise und gegebenenfalls auch noch während der fetten Betriebsweise der Brennkraftmaschine vorgesehen. Eine derartige fette Betriebsweise der Brennkraftmaschine kann dabei vorzugsweise dazu verwendet werden, einen Speicherkatalysator der Brennkraftmaschine zu regenerieren.

Ausdrücklich wird betont, dass der Reglereingriff 14 nicht zwingend auf beide Signale, also auf die Soll-Kraftstoffmasse me_soll und die Soll-Luftmasse mL_soll korrigierend einwirken muss. Stattdessen ist es auch möglich, dass der Reglereingriff nur auf die Soll-Kraftstoffmasse me_soll einwirkt und die Soll-Luftmasse mL_soll unverändert lässt. Ebenfalls ist selbstverständlich auch ein umgekehrtes Vorgehen möglich.

Ist die Zumesseinrichtung 15 dazu geeignet, den Kraftstoff in zwei aufeinanderfolgenden Teileinspritzungen in den Brennraum der Brennkraftmaschine einzuspritzen, so wird ein Soll-Spritzabstand sa_soll von der Momentensteuerung 11 vorgegeben. Dieser Soll-Spritzabstand sa_soll kann dann wiederum von dem Reglereingriff 14 zu einem korrigierten Soll-Spritzabstand sa_soll' verändert werden. Der korrigierte Soll-Spritzabstand sa_soll' wird dann schließlich der Zumesseinrichtung 15 für die Einspritzung zugeführt.

Durch die Veränderung des Soll-Spritzabstands sa_soll wird die Gemischzusammensetzung im Brennraum der Brennkraftmaschine nicht verändert. Die zugeführte Kraftstoffmasse und die zugeführte Luftmasse bleiben gleich. Damit bleibt auch das zugehörige Lambda der Brennkraftmaschine gleich.

Durch die Veränderung des Soll-Spritzabstands ist es jedoch möglich, das von der Brennkraftmaschine erzeugte Drehmoment, also das Ist-Drehmoment md_ist zu verändern. Damit kann von dem Reglereingriff 14 über die Korrektur des Soll-Spritzabstands sa_soll das Ist-Drehmoment md_ist beeinflusst werden, ohne dass hierdurch das Lambda der Brennkraftmaschine sich ändert.

Ausdrücklich wird darauf hingewiesen, dass die Korrektur des Soll-Spritzabstands sa_soll durch den Reglereingriff 14 auch völlig unabhängig von jeglicher Beeinflussung der Soll-Kraftmasse me_soll und/oder der Soll-Luftmasse mL_soll durchgeführt werden kann. Es ist sogar besonders vorteilhaft, wenn der Regler 13 über den Reglereingriff 14 nur den Soll-Spritzabstand sa_soll korrigiert, ohne die Soll-Kraftstoffmasse me_soll oder die Soll-Luftmasse mL_soll zu verändern.

Bei dem vorstehend beschriebenen Beispiel sind das Soll-Drehmoment md_soll und das Ist_Drehmoment md_ist als absolute Größen dargestellt. Dies kann insbesondere im Zusammenhang mit der Ableitung des Ist-Drehmoments md_ist aus der Drehzahl der Brennkraftmaschine aufwendig sein.

Erfindungsgemäß ist vorgesehen, das Soll-Drehmoment md_soll und das Ist_Drehmoment md_ist als relative Größen zu verarbeiten.

Hierzu wird zu Beginn einer Regeneration, also unmittelbar zu Beginn des Übergangs in die fette Betriebsweise der Brennkraftmaschine ein Soll-Start-Drehmoment md_soll_0 bestimmt und abgespeichert. Danach werden nur noch die Soll-Drehmoment-Änderungen delta_md_soll des Soll-Drehmoments md_soll gegenüber diesem Soll-Start-Drehmoment md_soll_0 über die Gleichung

$$delta\_md\_soll = md\_soll - md\_soll\_0$$

berechnet.

In entsprechender Weise wird zu Beginn des Übergangs in die Regeneration ein Ist-Start-Drehmoment md_ist_start ermittelt und abgespeichert. Danach werden nur noch die Ist-Drehmoment-Änderungen delta_md_ist gegenüber diesem Ist-Start-Drehmoment über die Gleichung

$$delta\_md\_ist = md\_ist - md\_ist\_0$$

berechnet.

Die vorgenannten Ist-Drehmoment-Änderungen delta_md_ist können dabei wesentlich einfacher aus Änderungen der Drehzahl der Brennkraftmaschine ermittelt werden.

Erfindungsgemäß ist vorgesehen, daß die vorstehend erläuterten relativen Größen auch zur Regelung der Brennkraftmaschine herangezogen werden, daß also z.B. die Drehmoment-Differenz mittels der relativen Größen ausgeregelt wird.

**Patentansprüche**

1.  Verfahren zum Betreiben einer Brennkraftmaschine insbesondere eines Kraftfahrzeugs, bei dem eine Soll- Kraftstoffmasse (me_soll) und/oder eine Soll-Luftmasse (mL_soll) in Abhängigkeit von einem Soll-Drehmoment (md_soll) ermittelt wird/werden, und bei dem von einer ersten Betriebsweise in eine zweite Betriebsweise der Brennkraftmaschine übergegangen wird, **dadurch gekennzeichnet, dass** beim Übergang in die zweite Betriebsweise eine Soll-Drehmoment-Änderung (delta_md_soll) und eine Ist-Drehmoment-Änderung (delta_md_ist) ermittelt wird, dass eine Drehmoment-Differenz (md_diff) zwischen der Soll- Drehmoment-Änderung (delta_md_soll) und der Ist-Drehmoment-Änderung (delta_md_ist) berechnet wird, und dass die Soll-Kraftstoffmasse (me_soll) und/oder die Soll-Luftmasse (mL_soll) in Abhängigkeit von der Drehmoment-Differenz (md_diff) beeinflusst wird/werden.

2.  Verfahren nach Anspruche 1, **dadurch gekennzeichnet, dass** die Ist-Drehmoment-Änderung (delta_md_ist) aus der Drehzahl der Brennkraftmaschine ermittelt wird.

3.  Verfahren nach Anspruche 1, **dadurch gekennzeichnet, dass** die Drehmoment-Differenz (md_diff) von einem Regler (13) zu Null geregelt wird.

4.  Verfahren nach einem der Ansprüche 1 bis 2, **dadurch gekennzeichnet, dass** die Soll-Kraftstoffmasse (me_soll) und/oder die Soll-Luftmasse (mL_soll) über ein Reglereingriffsmodell (14) von der Drehmoment-Differenz (md_diff) beeinflusst wird/werden.

5.  Verfahren nach einem der Ansprüche 1 bis 3, wobei die zweite Betriebsweise eine fette Betriebsweise ist, **dadurch gekennzeichnet, dass** mit dem Übergang in die fette Betriebsweise der Brennkraftmaschine in eine Regenerierung eines Speicherkatalysators übergegangen wird.

6.  Verfahren nach einem der Ansprüche 1 bis 4, **dadurch gekennzeichnet, dass** die Soll-Kraftstoffmasse (me_soll) und/oder die Soll-Luftmasse (mL_soll) in Abhängigkeit von dem Soll-Drehmoment (md_soll) von einer Steuerung (11) gesteuert wird/werden.

7.  Verfahren nach einem der Ansprüche 1 bis 5, **dadurch gekennzeichnet, dass** anstelle der Soll-Kraftstoffmasse (me_soll) und/oder der Soll-Luftmasse (mL_soll) der Soll- Spritzabstand (sa_soll) zwischen einer ersten Teileinspritzung und einer zweiten Teileinspritzung in Abhängigkeit von der Drehmoment-Differenz (md_diff) beeinflusst wird.

8.  Steuerelement, insbesondere Read-Only-Memory oder Flash-Memory, für ein Steuergerät einer Brennkraftmaschine insbesondere eines Kraftfahrzeugs, auf dem ein Programm abgespeichert ist, das auf einem Rechengerät, insbesondere auf einem Mikroprozessor, ablauffähig und zur Ausführung eines Verfahrens nach einem der Ansprüche 1 bis 7 geeignet ist.

9.  Steuergerät für eine Brennkraftmaschine insbesondere eines Kraftfahrzeugs, wobei das Steuergerät zur Ermittlung einer Soll-Kraftstoffmasse (me_soll) und/oder einer Soll- Luftmasse (mL_soll) in Abhängigkeit von einem Soll- Drehmoment (md_soll) und zum Übergang von einer ersten Betriebsweise in eine zweite Betriebsweise der Brennkraftmaschine vorgesehen ist, **dadurch gekennzeichnet, dass** durch das Steuergerät beim Übergang in die zweite Betriebsweise der Brennkraftmaschine eine Soll-Drehmoment-Änderung (delta_md_soll) und eine Ist-Drehmoment-Änderung (delta_md_ist) ermittelbar ist, dass durch das Steuergerät eine Drehmoment-Differenz (md_diff) zwischen der Soll- Drehmoment-Änderung (delta_md_soll) und der Ist-Drehmoment-Änderung (delta_md_ist) berechenbar ist, und dass durch das Steuergerät die Soll-Kraftstoffmasse (me_soll) und/oder die Soll-Luftmasse (mL_soll) in Abhängigkeit von der Drehmoment-Differenz (md_diff) beeinflussbar ist.

10. Brennkraftmaschine insbesondere für ein Kraftfahrzeug mit einem Steuergerät zur Ermittlung einer Soll- Kraftstoffmasse (me_soll) und/oder einer Soll-Luftmasse (mL_soll) in Abhängigkeit von einem Soll-Drehmoment (md_soll) und zum Übergang von einer ersten Betriebsweise in eine zweite Betriebsweise der Brennkraftmaschine, **dadurch gekenn-**

**zeichnet, dass** durch das Steuergerät beim Übergang in die zweite Betriebsweise der Brennkraftmaschine ein Ist-Drehmoment (md_ist) ermittelbar ist, dass durch das Steuergerät beim Übergang in die zweite Betriebsweise der Brennkraftmaschine eine Soll-Drehmoment-Änderung (delta_md_soll) und eine Ist-Drehmoment Änderung (delta_md_ist) ermittelbar ist, dass durch das Steuergerät eine Drehmoment-Differenz (md_diff) zwischen der Soll-Drehmoment-Änderung (delta_md_soll) und der Ist-Drehmoment Änderung (delta_md_ist) berechenbar ist, und dass durch das Steuergerät die Soll-Kraftstoffmasse (me_soll) und/oder die Soll-Luftmasse (mL_soll) in Abhängigkeit von der Drehmoment-Differenz (md_diff) beeinflussbar ist.

## Claims

1. Method for operating an internal combustion engine, in particular of a motor vehicle, in which a desired fuel mass (me_des) and/or a desired air mass (mL_des) is/are determined as a function of a desired torque (md_des), and in which the internal combustion engine is switched from a first operating mode to a second operating mode, **characterized in that**, when the engine is switched to the second operating mode, a desired torque change (delta_md_des) and an actual torque change (delta_md_act) are determined, **in that** a torque difference (md_diff) between the desired torque change (delta_md_des) and the actual torque change (delta_md_act) is calculated, and **in that** the desired fuel mass (me_des) and/or the desired air mass (mL_des) is/are influenced as a function of the torque difference (md_diff).

2. Method according to Claim 1, **characterized in that** the actual torque change (delta_md_act) is determined from the engine speed of the internal combustion engine.

3. Method according to Claim 1, **characterized in that** the torque difference (md_diff) is set to zero by a regulator (13).

4. Method according to one of Claims 1 to 2, **characterized in that** the desired fuel mass (me_des) and/or the desired air mass (mL_des) is/are influenced by means of a regulator intervention model (14) for the torque difference (md_diff).

5. Method according to one of Claims 1 to 3, in which the second operating mode is a rich operating mode, **characterized in that**, when the internal combustion engine is switched to the rich operating mode, a storage catalytic converter is regenerated.

6. Method according to one of Claims 1 to 4, **characterized in that** the desired fuel mass (me_des) and/or the desired air mass (mL_des) is/are controlled by a controller (11) as a function of the desired torque (md_des).

7. Method according to one of Claims 1 to 5, **characterized in that** the desired injection interval (sa_des) between a first partial injection and a second partial injection instead of the desired fuel mass (me_des) and/or the desired air mass (mL_des) is influenced as a function of the torque difference (md_diff).

8. Control element, in particular read only memory or flash memory, for a control unit of an internal combustion engine, in particular of a motor vehicle, on which a program is stored, which can run on a computer unit, in particular on a microprocessor, and is suitable for carrying out a method according to one of Claims 1 to 7.

9. Control unit for an internal combustion engine, in particular of a motor vehicle, the control unit being intended to determine a desired fuel mass (me_des) and/or a desired air mass (mL_des) as a function of a desired torque (md_des) and to switch the internal combustion engine from a first operating mode to a second operating mode, **characterized in that** the control unit, when the internal combustion engine is being switched to the second operating mode, can be used to determine a desired torque change (delta_md_des) and an actual torque change (delta_md_act), **in that** the control unit can be used to calculate a torque difference (md_diff) between the desired torque change (delta_md_des) and the actual torque change (delta_md_act), and **in that** the control unit can be used to influence the desired fuel mass (me_des) and/or the desired air mass (mL_des) as a function of the torque difference (md_diff).

10. Internal combustion engine, in particular for a motor vehicle, having a control unit for determining a desired fuel mass (me_des) and/or a desired air mass (mL_des) as a function of a desired torque (md_des) and for switching the internal combustion engine from a first operating mode to a second operating mode, **characterized in that**, when the internal combustion engine is being switched to the second operating mode, the control unit can be used to determine an actual torque (md_act), **in that** when the internal combustion engine is being switched to the second operating mode the control unit can be used to determine a desired torque change (delta_md_des) and an actual torque change (delta_md_act), **in that** the control unit can be used to calculate a torque difference (md_diff) between the desired torque change (delta_md_des) and the actual torque change (delta_md_act), and **in that** the control unit can be used to influence the desired fuel mass (me_des) and/or the desired air mass (mL_des) as a function of the torque difference (md_diff).

## Revendications

**1.** Procédé pour faire fonctionner un moteur à combustion interne, en particulier d'un véhicule automobile, dans lequel une masse de carburant de consigne (me_soll) et/ou une masse d'air de consigne (mL_soll) est ou sont déterminée(s) en fonction d'un couple de consigne (md_soll) et dans lequel on passe d'un premier mode de fonctionnement à un second mode de fonctionnement du moteur à combustion interne,
**caractérisé en ce que**,
lors du passage au second mode de fonctionnement, une variation de couple de consigne (delta_md_soll) et une variation du couple réelle (delta_md_ist) sont déterminées, une différence de couple (md_diff) entre la variation de couple de consigne (delta_md_soll) et la variation de couple réelle (delta_md_ist) est calculée et la masse de carburant de consigne (me_soll) et/ou la masse d'air de consigne (mL_soll) est ou sont influencées en fonction de la différence de couple (md_diff).

**2.** Procédé selon la revendication 1,
**caractérisé en ce que**
la variation de couple réelle (delta_md_ist) est déterminée à partir de la vitesse de rotation du moteur à combustion interne.

**3.** Procédé selon la revendication 1,
**caractérisé en ce que**
la différence de couple (md_diff) est régulée à zéro par un régulateur (13).

**4.** Procédé selon une des revendications 1 à 2,
**caractérisé en ce que**
la masse de carburant de consigne (me_soll) et/ou la masse d'air de consigne (mL_soll) est ou sont influencées par la différence de couple (md_diff) au moyen d'un modèle d'intervention de régulateur (14).

**5.** Procédé selon une des revendications 1 à 3, dans lequel le second mode de fonctionnement est un mode de fonctionnement riche,
**caractérisé en ce que**,
lors du passage au mode de fonctionnement riche du moteur à combustion interne, on passe aussi à une régénération d'un catalyseur accumulateur.

**6.** Procédé selon une des revendications 1 à 4,
**caractérisé en ce que**
la masse de carburant de consigne (me_soll) et/ou la masse d'air de consigne (mL_soll) est ou sont commandées par une commande (11) en fonction du couple de consigne (md_soll).

**7.** Procédé selon une des revendications 1 à 5,
**caractérisé en ce qu'**
en remplacement de la masse de carburant de consigne (me_soll) et/ou de la masse d'air de consigne (mL_soll), c'est l'espacement d'injection de consigne (sa_soll) entre une première injection partielle et une seconde injection partielle qui est influencé en fonction de la différence de couple (md_diff).

**8.** Elément de commande, en particulier mémoire morte ou mémoire flash, pour un appareil de commande d'un moteur à combustion interne, en particulier d'un véhicule automobile, sur lequel est enregistré un programme qui peut être exécuté sur un appareil de calcul, en particulier sur un microprocesseur, et qui est approprié pour la mise en oeuvre d'un procédé selon une des revendications 1 à 7.

**9.** Appareil de commande pour un moteur à combustion interne, en particulier d'un véhicule automobile, l'appareil de commande étant prévu pour déterminer une masse de carburant de consigne (me_soll) et/ou une masse d'air de consigne (mL_soll) en fonction d'un couple de consigne (md_soll) et pour passer d'un premier mode de fonctionnement à un second mode de fonctionnement du moteur à combustion interne,
**caractérisé en ce que**,
lors du passage au second mode de fonctionnement du moteur à combustion interne, l'appareil de commande peut déterminer une variation de couple de consigne (delta_md_soll) et une variation de couple réelle (delta_md_ist), l'appareil de commande peut calculer une différence de couple (md_diff) entre la variation de couple de consigne (delta_md_soll) et la variation de couple réelle (delta_md_ist), et l'appareil de commande peut influencer la masse de carburant de consigne (me_soll) et/ou la masse d'air de consigne (mL_soll) en fonction de la différence de couple (md_diff).

**10.** Moteur à combustion interne, en particulier pour un véhicule automobile, comprenant un appareil de commande prévu pour déterminer une masse de carburant de consigne (me_soll) et/ou une masse d'air de consigne (mL_soll) en fonction d'un couple de consigne (md_soll) et pour passer d'un premier mode de fonctionnement à un second mode de fonctionnement du moteur à combustion interne,
**caractérisé en ce que**,

lors du passage au second mode de fonctionnement du moteur à combustion interne, l'appareil de commande peut déterminer un couple réel (md_ist), **en ce que**, lors du passage au second mode de fonctionnement du moteur à combustion interne, l'appareil de commande peut déterminer une variation de couple de consigne (delta_md_soll) et une variation de couple réelle (delta_md_ist), l'appareil de commande peut calculer une différence de couple (md_diff) entre la variation de couple de consigne (delta_md_soll) et la variation de couple réelle (delta_md_ist) et l'appareil de commande peut influencer la masse de carburant de consigne (me_soll) et/ou la masse d'air de consigne (mL_soll) en fonction de la différence de couple (md_diff).

EP 1 274 929 B1